# EUROPEAN PATENT APPLICATION

(11) **EP 2 383 744 A1**
(43) Date of publication of application: **02.11.2011**
(21) Application number: 10160952.7
(22) Date of filing: 23.04.2010
(51) Int. Cl.: G11B 33/12, G11B 31/00, B60R 11/02, H04B 1/08

(54) **Flip-out multimedia car stereo**

(71) Applicant: Dongguan Superstring Electronics Co Ltd, Dongguan City Guangdong (CN)
(72) Inventor: Dong, Yuemin, Guandong (CN)
(74) Representative: Baldwin, Mark

(57) **Abstract**

A flip-out multimedia car stereo comprises a top casing (1), a bottom casing (2), a disc loading driver (3), a flip-out device (5) and a control circuit board (4). The flip-out device is installed between the top and bottom casing. The flip-out device comprises a display monitor mount, a folding mechanism, a display monitor circuit board, a slide frame and an operating device. A slideway is placed on the inner two sides of the top casing for accommodating the slide frame. The disc loading driver is fixed onto the top of the bottom casing. The control circuit board is installed at the back of the disc loading driver. The operating device is installed at one side of the slide frame. The display monitor circuit board is installed on the slide frame.

## Description

### Field of the Invention

The invention relates to flip-out multimedia stereo devices for vehicles.

### Background of the invention

A multimedia car stereo device is a mutli-function entertainment system installed inside of a vehicle for providing entertainment for the driver or the passengers of the vehicle. Common car stereos provide the function for playing DVD format of compact discs. Others include the function to play VCD/MP3 or MP4 format of discs or electronic files. There are others that provide recording, digital television, navigation and other functions. As the number of functions of a car stereo increases, the required number of parts also increases. However, because of the limited available installation space for a car stereo in a car, it is only possible to include additional components by reducing other small car stereo parts. It is especially true for flip-out multimedia car stereo devices, in which, in general, the flip-out device takes up a relatively large portion of the installation space. To accommodate the additional components, the manufacturer must use smaller and more expensive parts, which raises the production cost of flip-out multimedia car stereo devices.

A typical flip-out multimedia car stereo device comprises a top casing, a bottom casing, a disc loading driver, a flip-out device and a control circuit board. The flip-out device is generally installed between the top casing and the disc loading driver. The flip-out device comprises a display monitor mount, a folding mechanism, a display monitor circuit board, a slide frame and an operating device. A slideway is installed in the inner two sides of the top casing for accommodating the slide frame. The control circuit board is installed between the disc loading driver and the bottom casing. The operating device is fixed in the centre of the slide frame. The display monitor circuit board is installed behind the rear end of the display monitor mount, which requires a relatively larger space for installing the flip-out device. In addition, the current configuration has the control circuit board installed between the disc loading driver and the bottom casing, the operating device installed in the centre of the slide frame and the display monitor circuit board installed at the back end of the display monitor mount requiring a larger space for installing the flip-out device. Furthermore, with this configuration the control circuit board is installed between the disc loading driver and the bottom casing. This limits the size of the control circuit board, requiring the use of a smaller and more expensive control circuit board and so, increasing the production cost.

### Summary of the Invention

The invention provides a flip-out multimedia car stereo device as specified in claim 1.

The invention also includes a vehicle multimedia device as specified in claim 5. The vehicle multimedia device typically comprises one or more entertainment devices.

### Brief Description of the Drawings

Figure 1 is a perspective view of a flip-out multimedia car stereo device;
Figure 2 shows the flip-out multimedia car stereo device of Figure 1 without the top casing and the flip-out device;
Figure 3 is an exploded perspective view of the flip-out multimedia car stereo device of Figure 1;
Figure 4 is an enlargement of Part A of the Figure 1;and
Figure 5 is a perspective view of an operating device of the flip-out multimedia car stereo device of Figure 1.

### Detailed Description of the Preferred Embodiment

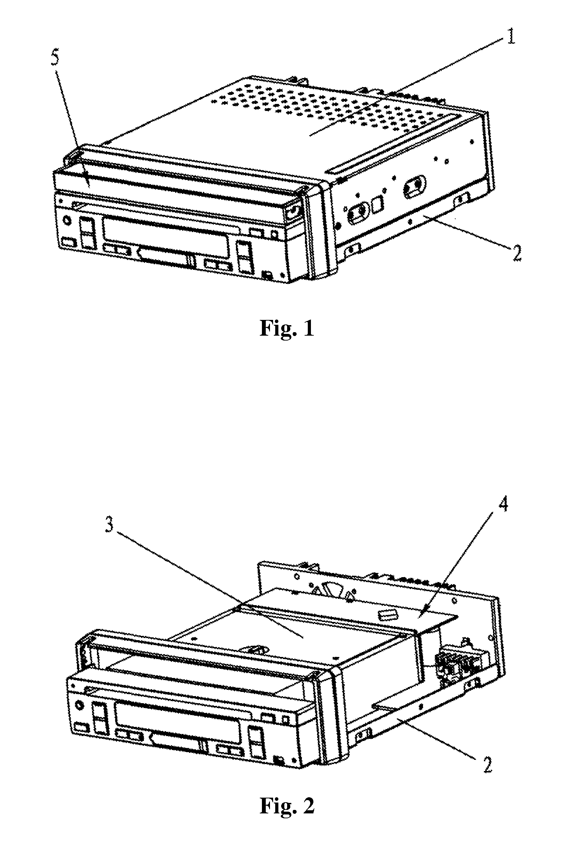

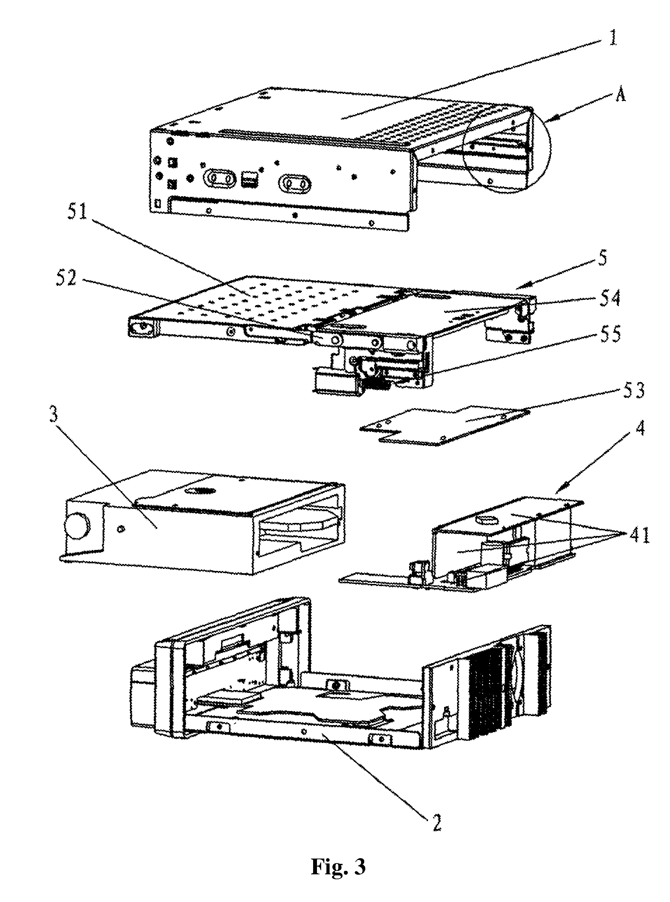

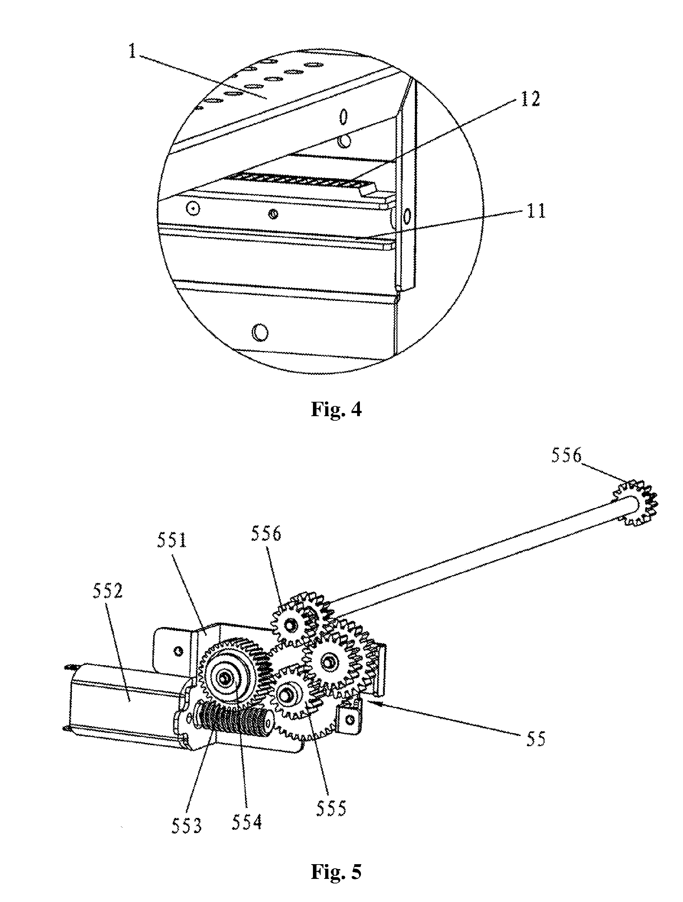

Referring to Figures 1 to 5, a flip-out multimedia car stereo device comprises a top casing 1, a bottom casing 2, a disc loading driver 3, a flip-out device 5 and a control circuit board 4. In the illustrated embodiment the control circuit board is for controlling the flip-out device 5. The flip-out device 5 is installed in between the top casing 1 and the disc loading driver 3. As shown in Figure 3, the flip-out device 5 comprises a display monitor mount 51, a folding mechanism 52, a display monitor circuit board 53, a slide frame 54 and an operating device 55. Referring to Figure 4, respective slideways 11 are provided on the opposed inner sides of the top casing 1 for accommodating the slide frame 54. The disc loading driver 3 is fixed onto the top of the horizontal surface of the bottom casing 2. The control circuit board 4 is installed behind the disc loading driver 3. The operating device 55 is installed at one side of the slide frame 54. The display monitor circuit board 53 is installed on the slide frame 54.

The control circuit board 4 comprises at least two integrated (IC) boards 41 pieced together at 90 degrees to one another. The IC boards 41 are pieced together by clipping (buckling) them together. As best seen in Figure 2, the control circuit board 4 is fitted into the space behind the disc loading driver 3 and in between a side of the bottom casing 2 and the disc loading driver.

Referring to Figure 5, the operating device 55 comprises a fixing frame 551 for mounting the operating device 55 onto the slide frame 54, a motor 552, a worm shaft 553, a worm gear 554, a gear assembly 555 and rotary wheel gears 556. The motor 552 and one of the rotary wheel gears 556 are installed to one side of the fixing frame 551. The worm shaft 553 is connected to the output end of the motor 552. The worm shaft 553 engages the worm gear 554 and the worm gear 554 is connected with the rotary wheel gear 556 through the gear assembly 555. The rotary wheel gears 556 engage respective rack gears 12 that are disposed on the sides of the top casing 1 such that rotation of the rotary wheel gears causes back and forth sliding movement of the slide frame 54. Typically, the rack gears 12 are disposed parallel and adjacent to the slideways 11. From Figure 2 it can be seen that the fixing frame 551 is configured such that the operating device 55 depends from the slide frame 54.

The configuration of the flip-out multimedia car stereo device shown in Figures 1 to 5 is space efficient as the empty space between the disc loading driver and bottom casing behind and at at least one of the two sides of the disc loading driver is put to use. This minimises the vertical space requirement of the flip-out device 5 within the casing, thereby increasing the installation space available for the disc loading driver. This allows the use of a larger and cheaper disc loading driver to reduce production costs.

It will be appreciated that embodiments of the invention can provide an improved structure for a flip-out multimedia car stereo device that effectively uses the space inside the device casing.

It will be appreciated that although the flip-out multimedia car stereo device is described as being for a car and having a stereo characteristic, the invention applies equally to flip-out multimedia devices for use in vehicles generally and that the device may have a mono rather than a stereo characteristic.

It will be appreciated that embodiments of the flip-out multimedia car stereo device enable more efficient use of the limited vertical spacing in a casing designed to be received in standard form factor aperture in a vehicle.

## Claims

1. A flip-out multimedia car stereo device comprising a top casing (1), a bottom casing (2), a disc loading driver (3), a control circuit board (4) and a flip-out device (5) installed between the top casing (1) and the disc loading driver, the flip-out device comprising a display monitor mount (51), a folding mechanism (52), a display monitor circuit board (53), a slide frame (54) and an operating device (55) and the top casing being provided with a slideway system (11) for accommodating the slide frame, wherein the disc loading driver is disposed on the top of the bottom casing, the control circuit is installed at the back of the disc loading driver, the operating device is installed to one side of the slide frame and the display monitor circuit board is installed on the slide frame.

2. A flip-out multimedia car stereo device as claimed in claim 1, wherein the control circuit board (4) comprises at least two integrated (IC) boards (41) pieced together at an angle of 90 degrees.

3. A flip-out multimedia car stereo device as claimed in claim 2, wherein said IC boards (41) are pieced together by clips.

4. A flip-out multimedia car stereo as claimed in claim 1, 2 or 3 wherein the operating device (55) comprises a fixing frame (551) for mounting said operating device onto the slide frame, a motor (552), a worm shaft (553), a worm gear (554), a gear assembly (555) and a rotary wheel gear (556), said motor and rotary wheel gear being installed to one side of the fixing frame, the worm shaft being connected to the output end of the motor, said worm shaft being engaged with the worm gear and said worm gear being connected with the rotary wheel gear through the gear assembly.

5. A vehicle multimedia device comprising a casing (1, 2) housing a disc player (3), a flip-out display device (5) and a control unit (4), said disc player and flip-out display device being disposed generally one above the other in said casing, said control unit (4) being disposed within said casing behind said disc player and said flip-out display (5) comprising a display support (54) slideably mounted in said casing and a drive unit (55) for driving said display support frame (54) which is carried by said display support and disposed to one side of said disc player.

6. A vehicle multimedia device as claimed in claim 5, wherein said flip-out display (5) comprises a display circuit board (53) carried by said display support.

7. A vehicle multimedia device as claimed in claim 5 or 6, wherein said control unit (4) comprises at least two circuit board portions (41) extending transversely of one another such at at least one circuit board portion (41) is disposed to one side of said disc player (3).

8. A vehicle multimedia device as claimed in claim 5, 6 or 7, wherein said drive unit (55) depends from said display support (54).

9. A vehicle multimedia device as claimed in any one of claims 5 to 8, wherein said disc player (3) is fixed to a lower transverse surface of said casing (1, 2).
